# EUROPEAN PATENT APPLICATION

(11) **EP 1 990 286 A1**
(43) Date of publication of application: **12.11.2008**
(21) Application number: 07009275.4
(22) Date of filing: 09.05.2007
(51) Int. Cl.: B65D 25/52, B65D 83/06

(54) **Container including a dispensing device**

(71) Applicant: Logidos ApS, 6200 Aebenraa (DK)
(72) Inventor: Nielsen, Keld Krogh, Rinkenaes 3600 Grasten (DK)

(57) **Abstract**

The invention relates to a dispensing device for releasable insertion into an outlet (2) of a container (1), the device comprising a top portion (6) subdividing the cross sectional area of an outlet (2) of the container (2) into a closed portion (3), through which material present in the container cannot pass, and an open portion (4), through which material present in the container can pass, said closed and open portions (3, 4) being divided by an edge (5). The edge (5) is provided with an outlet barrier wall (9) extending from said top portion (6) into the outlet (2) of the container (1), and the dispensing device is furthermore provided with an inlet barrier wall (10) inclined relative to the outlet barrier wall (9), one edge portion (11) of the inclined inlet barrier wall (10) being formed for contact with an inner wall portion of the outlet (2) of the container (1) when the device is placed in the outlet of the container, and where an opposing edge portion (12) of the inclined inlet barrier wall (10) defines a first opening (13) between the top portion (6) and the opposing edge portion (12) of the inclined inlet barrier wall (10), and where a second opening (14) is furthermore defined between the inclined inlet barrier wall (10) and the outlet barrier wall (9) such that when the device is placed in the outlet of the container, the inclined inlet barrier wall (10), the top portion (6), and the outlet barrier wall (9) thereby define a passageway through which material can pass from the interior of the container through the passageway and out through the outlet of the container.

## Description

### TECHNICAL FIELD

The present invention relates to a container for containing granular material such as ground coffee, freeze-dried instant coffee or tea, sugar, detergent powder, and the like, and including a dispensing device for releasable insertion into the outlet of the container and for dispensing the granular product.

### BACKGROUND OF THE INVENTION

Many combinations of a storage container and a dispensing device are known in the art, but all such known combinations are complicated as regards use and/or constructive elements. Furthermore, the dispensing device is often provided as an integral part of the container, which may not be desirable, neither from the point of view of the manufacturer of the container nor from the point of view of the user.

In connection with dispensing of instant coffee powder or ground coffee (and also for detergent powder and the like), the normal procedure is to open a container thereof and remove a batch, either with a spoon or by pouring. This is an imprecise, cumbersome and often messy procedure. Furthermore, the repeated opening of the storage container in connection with each dispensing operation gives rise to deterioration of the granular products, which lose aroma or are oxidised by contact with the oxygen in the atmosphere.

Therefore, there is a need for a simple and inexpensive dispensing device for a granular product which can be inserted into and if desired removed from a storage container that may be operated by any person and protects the contents of the container against deterioration by loss of aroma or oxidation by limiting the contact with the atmosphere. The batch-wise dispensing should also be precise and uniform (reproducible) so that it is ensured that the desired total amount of product dispensed is achieved without having to resort to further measuring actions. It is furthermore important that the dispensing device can be inserted into and released from the storage container in an easy and intuitively correct manner and also that the dispensing device, when inserted into the storage container, is reliably retained in the container.

### SUMMARY OF THE INVENTION

According to the invention, the above objectives are obtained by a dispensing device for batch dispensing granular material such as ground coffee, freeze-dried instant coffee or tea, sugar, which dispensing device is designed for releasable insertion into an outlet of a hand-held container, for instance into the neck portion of a jar for such a container.

The dispensing device according to the invention basically comprises a top portion subdividing the cross sectional area of an outlet of the container into a closed portion, through which material present in the container cannot pass, and an open portion, through which material present in the container can pass, said closed and open portions being divided by an edge, where the top portion is provided with side portions for releasable insertion into the outlet of the container, where the side portions opposite the top portion comprise radially outwardly extending, resilient retainment portions formed for releasable engagement with the outlet of the container or regions of the container adjacent the outlet of the container, the outer shape of the retainment portions substantially corresponding to the corresponding portions of the inner surface of the outlet, into which the dispensing device is to be inserted. According to a preferred embodiment of the invention, these retainment portions are shaped as a skirt, tapering radially outwards from the corresponding side portion in the direction away from the top portion. The retainment portions are in the following briefly referred to as "skirt portions". Said edge is provided with an outlet barrier wall extending from the top portion into the outlet of the container, the dispensing device being furthermore provided with an inlet barrier wall inclined relative to the outlet barrier wall, one edge portion of the inlet barrier wall being formed for contact with an inner wall portion of the outlet of the container when the device is placed in the outlet of the container, and an opposing edge portion of the inlet barrier wall defining an opening between the top portion and said opposing edge portion of the inlet barrier wall, an opening being furthermore defined between said inlet barrier wall and said outlet barrier wall, the inlet barrier wall, the top portion and the outlet barrier wall when the device is placed in the outlet of the container, thereby defining a passageway through which material can pass from the interior of the container through the passageway and out through the outlet of the container.

Although the outlet of the container, and hence a corresponding dispensing device according to the invention, could have any shape, a specific embodiment of a dispensing device according to the invention is of a generally cylindrical shape formed for insertion into a corresponding cylindrical neck portion of a jar for containing ground coffee, freeze-dried instant coffee, etc. This specific embodiment will be described in more detail in the detailed description of the invention. An alternative embodiment of the invention could be a box-shaped device formed for insertion into a corresponding box-shaped outlet portion of a container. A number of other alternative general shapes would also fall within the scope of the invention as defined by independent claim 1.

The dimensions and relative orientations of various of the inner structural elements of the dispensing device according to the invention have been found to be important for dispensing a precise and reproducible amount of material through the dispensing device. Relative dimensions and orientations of structures of the dispensing device can be defined with reference to the longitudinal axis Z through the device perpendicular to the plane of the top portion of the device and with the direction of the axis away from the container. The Z co-ordinate of the surface of the top portion is set to zero. The above mentioned outlet barrier wall then extends a distance d1 from the top portion towards the interior of the container and terminates in an edge portion at the Z co-ordinate -d1. The inclined inlet barrier wall extends as mentioned from the inner surface of the outlet of the container and terminates at an opposing edge portion, the Z co-ordinate of which is -d2. It has been found that optimally d2 > d1, so that a clearance Δ between the Z co-ordinate levels -d1 and -d2 is attained. This feature is illustrated more clearly in the detailed description of the invention. Furthermore the angle of inclination α of the inlet barrier wall relative to the longitudinal axis Z can be optimised and determines (together with the extension along the Z axis of the side portions with associated skirt portions) the insertion depth of the dispensing device into the outlet of the container. Although the outlet barrier wall in the following detailed description of the invention is shown as extending perpendicularly from the top portion of the dispensing device, the outlet barrier wall may also form an angle β relative to the Z axis, the angle β in the shown embodiment being specifically chosen to 0 degrees. Furthermore, although the outlet barrier wall in the embodiment described in the detailed description of the invention is of a rectangular shape, as seen from a direction perpendicular to the Z-axis, other shapes of the outlet barrier wall may also be used and will fall within the scope of the present invention.

When the dispensing device according to the invention is inserted into an outlet of a container there is provided a device for batch dispensing granular material such as ground coffee, freeze-dried instant coffee or tea, sugar, detergent powder, and the like from the container, where the container has a top portion and a bottom portion, the container being manually rotatable from an upright position with said top portion located above said bottom portion and an inverted position with said top portion located below said bottom portion, the dispensing device and said container together defining a passageway extending in a material flow direction from the container for allowing granular material to enter said passage from said container to a material outlet for allowing granular material to exit from said passageway, a barrier chamber being defined in said passageway between said material inlet of the dispensing device and the material outlet by means of an inlet barrier wall and an outlet barrier wall, said inlet barrier wall defining an inlet barrier aperture configured and located so as to allow material to flow into said barrier chamber in said flow direction when said container is in said inverted position and so as to hinder said material in flowing out of said barrier chamber opposite said flow direction when said container is in said upright position, and said outlet barrier wall defining an outlet barrier aperture configured and located so as to allow material to flow out of said barrier chamber in said flow direction when said container is in said upright position and so as to hinder said material in flowing out of said barrier chamber in said flow direction when said container is in said inverted position.

By means of the dispensing device according to the invention, an intuitively easily understandable and easily implementable pouring motion of the container will entail dispensing of substantially uniformly-sized batches of the granular material without having to access the interior of the container and without any substantial risk of spilling material. Thus, by application of the dispensing device according to the invention, the correct dosage of material from the container can be ascertained, thereby improving the quality of the final product obtained from the material in the container and furthermore reducing the risk of overdosing and potential waste of material. The dispensing device according to the invention may thus also lead to economically advantageous results.

According to a preferred embodiment, the top portion is flush with the upper rim portion of the outlet of the container when the dispensing device is inserted in the container. Prior to use, the outer surface of the top portion may be covered by a protective foil, which is also attached to the rim portion of the outlet of the container in order to ensure a hermetically sealed closure of the container.

### BRIEF DESCRIPTION OF THE DRAWINGS

In the following, the invention will be explained in more detail in connection with different embodiments of the combination and the dispensing device according to the invention shown, solely by way of example, in the accompanying drawings where:
Figure 1 shows a schematic perspective partly cross-sectional view of an embodiment of the dispensing device according to the invention;
Figure 2 shows a side elevation, partly in cross section, of the embodiment of the dispensing device according to the invention shown in figure 1;
Figure 3 shows a schematic perspective view of the embodiment of the invention shown in figure 1 seen from a direction facing the outlet chamber of the dispensing device;
Figure 4 shows a schematic perspective view of the embodiment of the invention shown in figure 1 seen from a direction facing the inlet chamber of the dispensing device;
Figure 5 shows a schematic front elevation of the embodiment shown in figure 1;
Figure 6 shows a schematic cross sectional side elevation of a container with an embodiment of the dispensing device according to the invention inserted into the outlet (neck) portion of the container, the container in this case being a jar typically used for freeze-dried instant coffee, etc. The dispensing device is shown in schematic front elevation as in figure 5;
Figure 7 shows a schematic cross sectional front elevation of a container with an embodiment of the dispensing device according to the invention inserted into the outlet (neck) portion of the container, the container in this case being a jar typically used for freeze-dried instant coffee, etc. The dispensing device is shown in schematic, partly cross-sectional side elevation corresponding to figure 2, thereby illustrating among other the inlet chamber, barrier chamber and outlet chamber formed by insertion of the dispensing device into the neck of the jar, and
Figure 8 shows a schematic perspective view of a container with the dispensing device inserted in the neck portion (outlet portion) of the container in a state ready for dispensing material from the container.

### DETAILED DESCRIPTION OF THE INVENTION

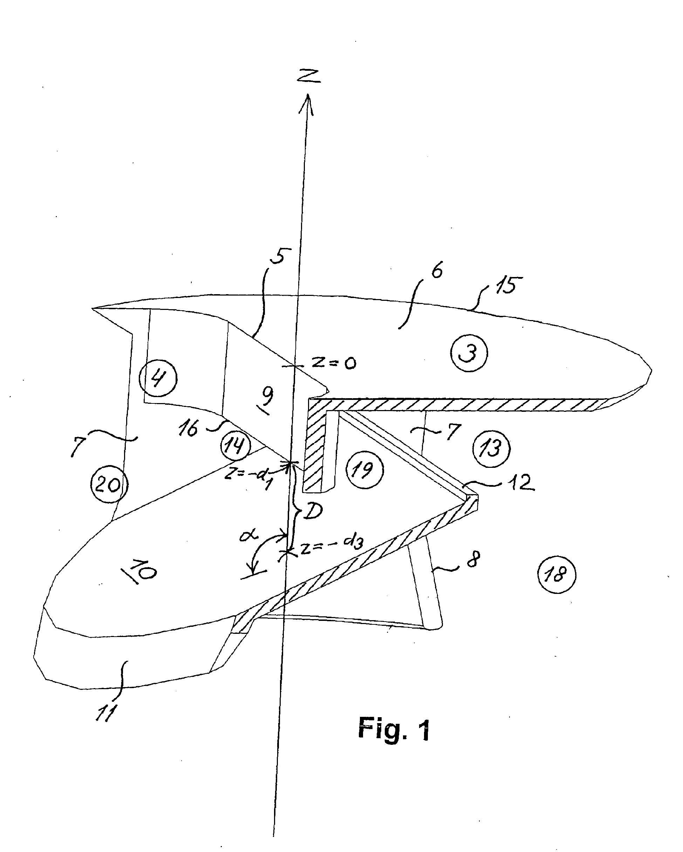

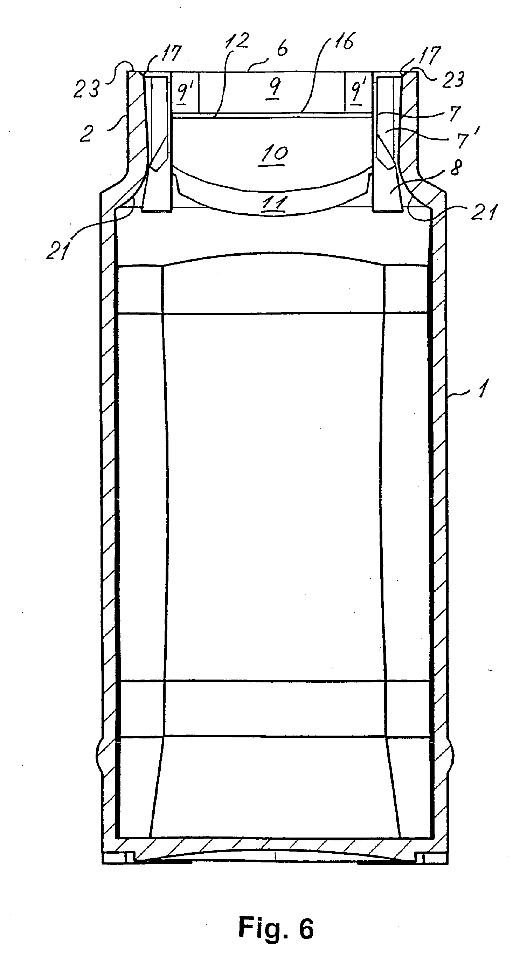

Referring to figure 1, there is shown a schematic perspective view, partly in cross section, of a first embodiment of the dispensing device according to the invention. The dispensing device can be releasably inserted into an outlet of a container, as shown in figures 6, 7, and 8. The device comprises a top portion 6, which in the shown embodiment is substantially planar, although other surface shapes could also be used if desired. The top portion 6 subdivides the cross-sectional area of an outlet of the container into a closed portion 3, through which material present in the container cannot pass, and an open portion 4, through which material present in the container can pass. The boundary of the top portion in the shown embodiment comprises a circular peripheral portion 15 corresponding in shape to a circular (cylindrical) outlet of a container, for instance the neck 2 of the jar 1 shown in figures 6, 7 and 8. The closed and open portions 3, 4 are divided by an edge portion 5. The top portion 6 is furthermore provided with side portions 7 for releasable insertion into the outlet of the container, and the side portions 7 comprise resilient skirt portions 8 for releasable engagement with the inner surface of the outlet of the container or regions of the inner surface of the container adjacent the outlet of the container. On insertion of the dispensing device into the outlet of the container, the skirt portions 8 can, due to their resiliency, be compressed during passage through the outlet portion of the container, whereby they can pass through the outlet of the container and, when the dispensing device is fully inserted into the container, the skirt portions expand following the expanding inner surface of the container. By these means a very simple, yet reliable releasable locking mechanism is provided between the dispensing device and the inlet region of the container.

Referring to figure 1, dimensions and relative orientations of the various structures of the dispensing device are defined with reference to the longitudinal axis Z through the device. The Z-axis is oriented away from the interior of the container as shown.

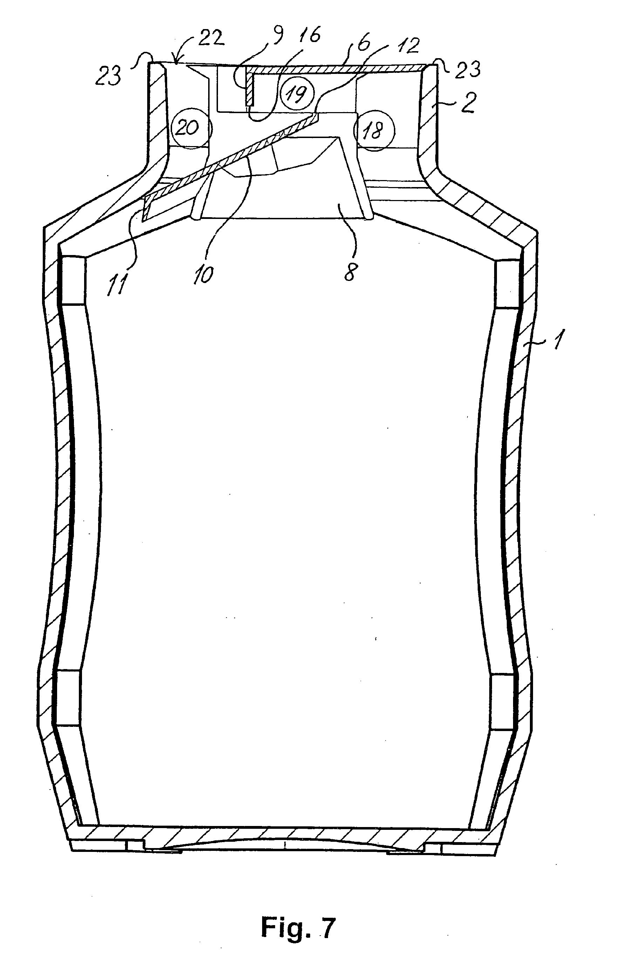

The edge 5 dividing the closed region 3 and the open region 4 is provided with an outlet barrier wall 9 extending from said top portion 6 into the outlet 2 of the container 1. The dispensing device is furthermore provided with an inlet barrier wall 10 inclined relative to the Z-axis and the outlet barrier wall 9. The plane of the inlet barrier wall 10 forms an angle α with the Z-axis. One edge portion 11 of the inlet barrier wall 10 is formed for contact with an inner wall portion of the outlet 2 of the container 1 when the device is placed in the outlet of the container, and an opposing edge portion 12 of the inlet barrier wall 10 defines a first opening 13 between the top portion 6 and said opposing edge portion 12 of the inlet barrier wall 10. Although the inlet barrier wall 10 in the shown embodiment comprises an elevated (in the direction of the Z-axis) edge portion 12, the inlet barrier wall 10 may alternatively form one smooth surface without the elevated portion 12. A second opening 14 is furthermore defined between said inlet barrier wall 10 and said outlet barrier wall 9. With the co-ordinate z = 0 defined at the upper surface of the top portion 6 as shown in figure 1, the output barrier wall 9 extends a distance d1 in the direction towards the container, terminating in a second edge portion 16 at the co-ordinate -d1. Similarly the inlet barrier wall 10 intersects the Z-axis at co-ordinate -d3, there being thus formed an opening 14 of height D between the lower edge portion 16 of the outlet barrier wall 9 and the corresponding surface portion of the inlet barrier wall 10. When the device is placed in the outlet of the container, the inlet barrier wall 10, the top portion 6 and the outlet barrier wall 9 thereby define a passageway, through which material can pass from the interior of the container through the passageway and out through the outlet of the container. This passageway in the direction of flow of material out of the container comprises three chambers: an inlet chamber 18, a barrier chamber 19, and an outlet chamber 20, which may become even more apparent with reference to figure 7 described below.

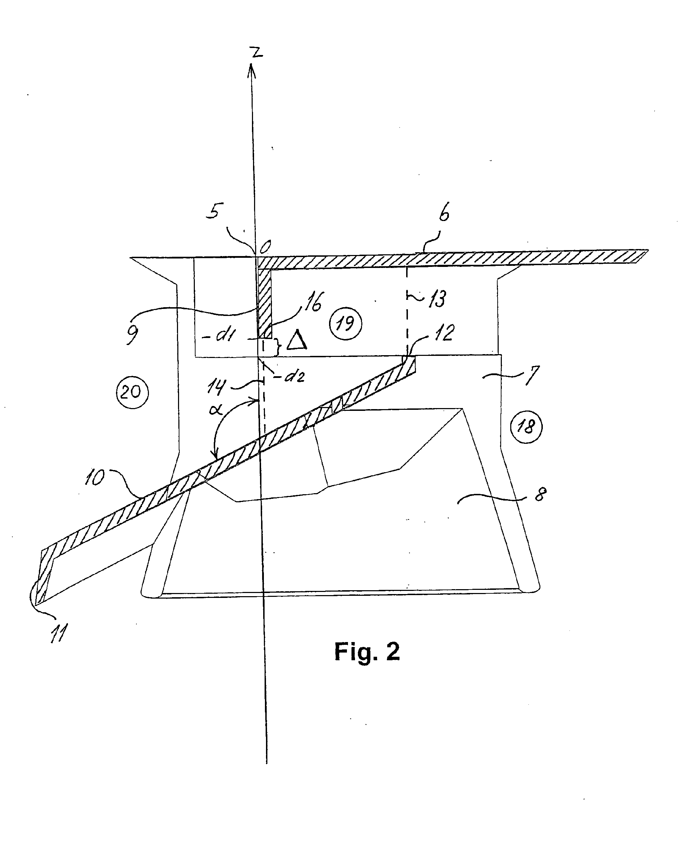

Referring to figure 2, there is shown a side elevation, partly in cross section, of the embodiment of the dispensing device according to the invention shown in figure 1. The parts of figure 2 shown in cross section (hatched) comprise the top portion 6 joined at the edge portion 5 with the outlet barrier wall 9, which extends in the direction towards the container (not shown), i.e. in the negative z-direction, a distance d1 to a terminating edge portion 16. The cross-sectional view furthermore comprises the inlet barrier wall 10 inclined an angle α relative to the longitudinal axis (Z-axis) of the dispensing device. At one end, the inlet barrier wall 10 terminates in an inclined end portion 11 formed to substantially correspond to the shape of the inner surface of the outlet of the container, which is located in the vicinity of the end portion 11 when the dispensing device is inserted into the outlet of the container. At the opposite end, the inlet barrier wall 10 terminates at a second edge portion 12, located a distance d2 away from the upper surface of the top portion 6. According to a preferred embodiment, d1 < d2, leaving a clearance Δ between the level of the edge 16 of the outlet barrier wall 9 and the edge 12 of the inlet barrier wall. Preferably Δ is in the range 1 to 1.5 mm. Embodiments with Δ = 0, or even d1 > d2, would however also fall within the scope of the invention. However, a clearance has been found to be important to ensure that the amount of material dispensed by the dispensing device according to the invention will remain constant regardless of the reduction of amount of material in the container, as material is being dispensed from the container. The consistency of the material in the container will generally change from the initial upper portions of material in the container, where the material will have a relatively loose, granular structure, towards the lower portions of the material, where the material will become more dense or compressed, thus gradually assuming a more powdery consistency towards the lower portions of the material in the container. The presence of the clearance Δ has been found to be important for dispensing the same amount of material despite the gradually more dense consistency of the material towards the bottom of the container.

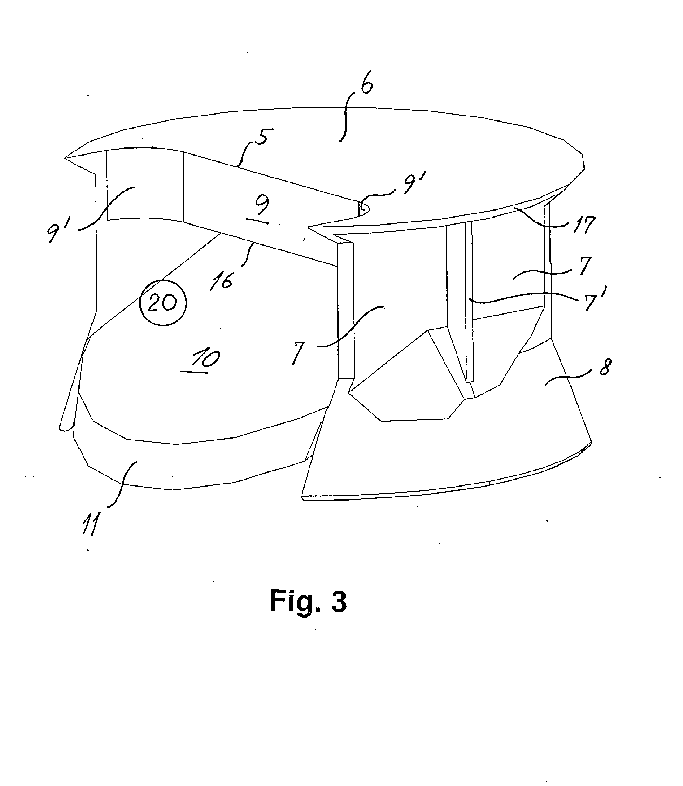

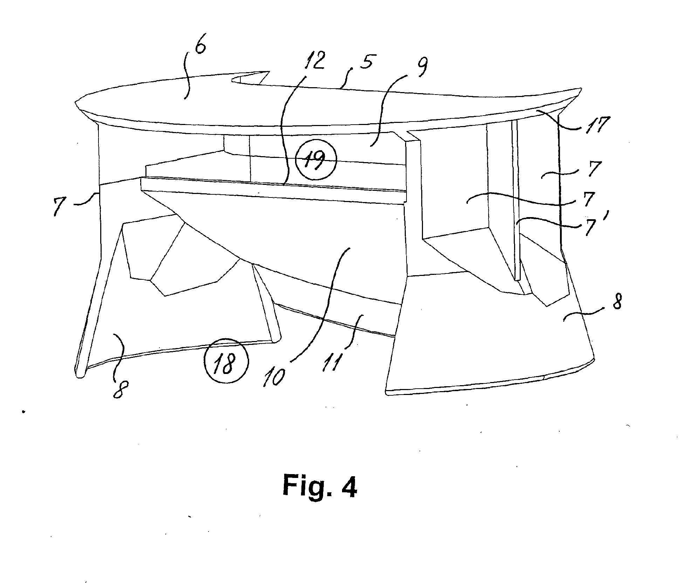

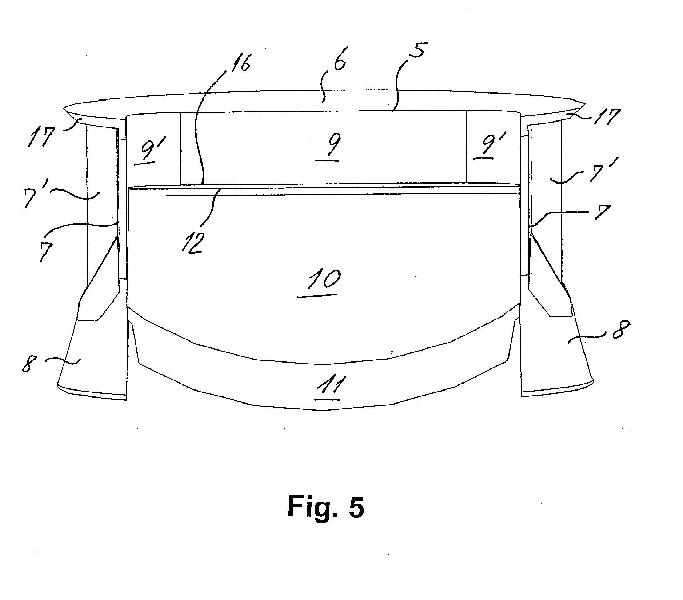

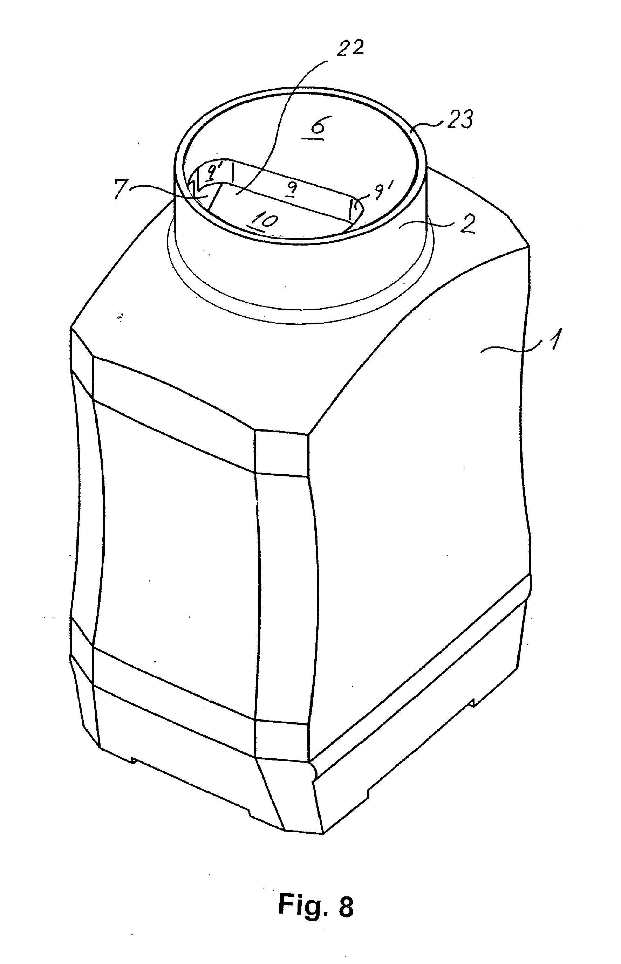

Figure 3 shows a schematic, perspective view of the embodiment of the invention shown in figure 1 seen from a direction facing the outlet chamber 20 of the dispensing device. In order to increase the rigidity of the side portions 7, these may comprise one or more ribs 7' extending from the top portion 6 towards the skirt portion 8. A possible shape of the skirt portion 8 is shown in figure 3 (and figures 4 and 5 ), the skirt portion 8 being formed substantially as a section of a frustum of a cone. Other shapes may be appropriate and should ideally be chosen, taking into account the shape of the outlet portion and possibly adjacent portions of the specific container with which the dispensing device is to be used. Figure 3 furthermore illustrates a possible shape of the outlet barrier wall 9, where this wall is provided with curved transition regions 9' towards the inner surface of the side portions 7. By the provision of these curved regions 9', the resulting outlet opening (see figure 8) from the container with the dispensing device inserted into the outlet will be of an approximately ellipsoidal shape.

Figure 4 shows a schematic perspective view of the embodiment of the invention shown in figure 1 seen from a direction facing the inlet chamber 18 of the dispensing device. A portion of the barrier chamber 19 is also visible in figure 4.

Figure 5 shows a schematic front elevation of the embodiment shown in figure 1, i.e. seen from a direction of the outlet chamber 20. As appears from figure 5, the edge portions 17 of the top portion 6 may be inwardly inclined in order to fit a corresponding rim region of the outlet of the container, as for instance shown in figures 6 and 7.

Figure 6 shows a schematic cross-sectional side elevation of a container 1 with an embodiment of the dispensing device according to the invention inserted into the outlet (neck) portion 2 of the container, the container in this case being a jar typically used for freeze-dried instant coffee, etc. The dispensing device is shown in schematic front elevation, as in figure 5. As shown in figure 6, when the dispensing device is fully inserted into the neck portion 2 of the jar 1, the skirt portions 8 extend radially outwardly due to their resiliency, thereby substantially following the outwardly extending transition region of the jar indicated by reference numeral 21 in figure 6. Thus a simple and yet reliable releasable retainment of the dispensing device to the outlet portion of the container is obtained when the dispensing device is fully inserted into the outlet of the container.

Figure 7 shows a schematic cross-sectional front elevation of the jar 1 shown in figure 7 with an embodiment of the dispensing device according to the invention inserted into the neck portion 2 of the container. The dispensing device is shown in schematic, partly cross-sectional side elevation corresponding to figure 2, thereby illustrating among other the inlet chamber 18, the barrier chamber 19, and the outlet chamber 20 formed by insertion of the dispensing device into the neck 2 of the jar 1.

Figure 8 shows a schematic perspective view of the jar 1 with the dispensing device inserted in the neck portion 2 of the jar in a state ready for dispensing material from the jar. In use, when dispensing granular material from the interior of the jar, the jar is inverted so that the mouth of the jar and the top portion 6 of the device face generally downwards. In this inverted position of the jar, granular material will flow into the inlet chamber 18 and further into the barrier chamber 19 via the opening 13 (see figure 1) until it is stopped by the outlet barrier wall 9.

The jar is then rotated so that the mouth of the jar and the top wall 6 are facing generally upwards. Hereby, part of the granular material in the inlet chamber 18 will flow back into the jar, and the other part will be prevented from doing so by the inlet barrier wall 10. This other part will flow into the barrier chamber 19 and the outlet chamber 20.

When the jar is subsequently inverted once again, most of the material in the barrier chamber 19 and practically all of the material in the outlet chamber 20 will flow out through the dispensing aperture 22, while a new portion of material enters the inlet chamber 18 and overflows into the barrier chamber 19.

The granular material in the jar will thus be dispensed in substantially uniform portions each time the jar is returned to a generally upright position and thereafter inverted to a generally upside down position.

Although in the present specification the releasable retainment means comprising the "skirt portion" described above and the various structural elements comprising the inlet barrier wall and the outlet barrier wall with their relative dimensions and orientations are comprised in a single dispensing device, it is to be understood that these features could also be used separately in other dispensers. Thus, for instance the retainment means comprising the skirt portions described above may be used in connection with other dispensing devices, and the internal structural elements (walls and chambers) described above may be incorporated into other dispensing devices, also such that form an integrated part of the container itself.

## Claims

1. Dispensing device for releasable insertion into an outlet (2) of a container (1), the device comprising a top portion (6) subdividing the cross sectional area of an outlet (2) of the container (2) into a closed portion (3), through which material present in the container cannot pass, and an open portion (4), through which material present in the container can pass, said closed and open portions (3, 4) being divided by an edge (5), where said edge (5) is provided with an outlet barrier wall (9) extending from said top portion (6) into the outlet (2) of the container (1), the dispensing device being furthermore provided with an inlet barrier wall (10) inclined relative to the outlet barrier wall (9), one edge portion (11) of the inclined inlet barrier wall (10) being formed for contact with an inner wall portion of the outlet (2) of the container (1) when the device is placed in the outlet of the container, and an opposing edge portion (12) of the inclined inlet barrier wall (10) defining a first opening (13) between the top portion (6) and said opposing edge portion (12) of the inclined inlet barrier wall (10), a second opening (14) being furthermore defined between said inclined inlet barrier wall (10) and said outlet barrier wall (9), the inclined inlet barrier wall (10), the top portion (6), and the outlet barrier wall (9) when the device is placed in the outlet of the container, thereby defining a passageway through which material can pass from the interior of the container through the passageway and out through the outlet of the container.

2. A dispensing device according to claim 1, where the top portion (6) is provided with side portions (7) for releasable insertion into the outlet of the container, where said side portions (7) comprise outwardly extending, resilient retainment portions (8) formed for releasable engagement with the outlet (2) of said container (1) or regions (21) of the container (1) adjacent the outlet (2) of the container, the outer shape of the retainment portions substantially corresponding to the corresponding portions of the inner surface of the outlet (2) of the container (1), into which the dispensing device is to be inserted.

3. Dispensing device according to claim 1, where said outlet barrier wall (9) extends a distance d1 from the top portion (6) in the direction towards said inlet barrier wall (10) and said opposing edge portion (12) of the inlet barrier wall (10) is located a distance d2 from the top portion (6), where d1 < d2.

4. Dispensing device according to claim 3, where d2 - d1 is in the range 1 to 1.5 mm.

5. Dispensing device according to claim 1, where said inlet barrier wall (10) forms an angle α relative to a longitudinal axis (Z) through the device, said axis extending perpendicularly relative to the top portion (6).

6. Dispensing device according to claim 5, where said angle 90 < α < 135 degrees.

7. Dispensing device according to claim 1, where said outlet barrier wall (9) is provided with lateral transition regions (9') in contact with said side portions (7).

8. A hand-held container (1) comprising an outlet portion (2), into which outlet portion (2) a dispensing device according to any of the preceding claim 1 to 7 is releasably inserted, the dispensing device and the container together defining a passageway for material in the container from the interior of the container through the dispensing device.

9. A hand-held container (1) according to claim 8, where the outer surface of the top portion (6) is provided with a removable cover or foil extending across the outer surface of the top portion (6) and attached to a rim portion (23) of the outlet portion (2) of the container (1).
